# EUROPÄISCHE PATENTSCHRIFT

(11) **EP 0 614 019 B1**
(45) Veröffentlichungstag und Bekanntmachung des Hinweises auf die Patenterteilung: **19.11.1997**
(21) Anmeldenummer: 94101169.4
(22) Anmeldetag: 27.01.1994
(51) Int. Cl.: F16B 7/04, F16B 11/00

(54) **T Verbindung zwischen zwei Profilen**
T connection between two profiles
Raccord en T entre deux profilés

(30) Priorität: 02.03.1993 DE 4306379
(43) Veröffentlichungstag der Anmeldung: 07.09.1994
(73) Patentinhaber: SCHÜCO International KG, D-33609 Bielefeld (DE)
(72) Erfinder: Habicht, Siegfried, D-33818 Leopoldshöhe (DE); Girnus, Mandfred, D-33818 Leopoldshöhe (DE)
(74) Vertreter: Stracke, Alexander, Dipl.-Ing.

(56) Entgegenhaltungen:
- DE-A- 2 116 125
- GB-A- 2 159 198
- GB-A- 2 256 908

## Beschreibung

Die vorliegende Erfindung betrifft eine T-Verbindung zwischen zwei Profilen, vorzugsweise einem Sprossen- und einem Rahmenprofil, wobei am Rahmenprofil mindestens ein in eine Hohlkammer des Sprossenprofiles hineinragender T-Verbinder befestigt ist, der mittels Schrauben, Bolzen od. dgl. mit dem Sprossenprofil mechanisch verbunden und zumindest im Stoß- oder Fugenbereich zwischen Rahmenprofil und Sprossenprofil zusätzlich mit dem Sprossenprofil verklebt ist.

T-Verbindungen der vorerwähnten Art sind an sich bekannt (vgl. GB-A- 2 159 198).

Bislang hat man die Verklebung zwischen T-Verbinder und Sprossenprofil in der Weise verwirklicht, daß man in den unteren Hohlkammerbereich, in den der T-Verbinder eingreift, vor dem Zusammensetzen von Rahmenprofil und Sprossenprofil einen Kleber eingestrichen hat, wobei hier Zweikomponenten-Kleber verwendet werden. Dieses weitestgehend offene Arbeiten mit angemischten Zweikomponenten-Klebern ist ganz allgemein mit den Nachteilen der unsauberen und luftbeeinflussenden Arbeitsbedingungen behaftet. Nachteilig ist weiterhin, daß in der Regel der in den unteren Endbereich der Hohlkammer eingespachtelte Kleber durch den T-Verbinder unkontrolliert weiter in die Hohlkammer hineingeschoben und verdrängt wird, so daß im eigentlichen Stoß- oder Fugenbereich zwischen Rahmenprofil und Sprossenprofil kein oder nur eine ungenügende Menge vom Kleber verbleibt.

Um die vorstehend beschriebenen Nachteile zu beheben, liegt der vorliegenden Erfindung die Aufgabe zugrunde, eine T-Verbindung der gattungsgemäßen Art so zu gestalten, daß ein einfacheres und zielgerichtetes Einbringen des Klebers bei vereinfachten Arbeitsbedingungen erreicht wird.

Diese Aufgabe wird erfindungsgemäß dadurch gelöst, daß der T-Verbinder mindestens einen parallel zum Rahmenprofil verlaufenden und über mindestens eine Einfüllöffnung im Sprossenprofil zugänglichen Kleberverteilungskanal aufweist, der zumindest eine zu einer parallel zum Rahmenprofil verlaufenden Hohlkammerwandung des Sprossenprofiles hin verlaufende Queröffnung aufweist.

Diese Maßnahmen ermöglicht es, nach der rein mechanischen Verbindung zwischen T-Verbinder und Sprossenprofil von außen Kleber in den Kleberverteilungskanal und über dessen Queröffnungen in den Bereich zwischen Hohlkammerwandung einerseits und T-Verbinder andererseits zu pressen, wobei durch die Lage der Queröffnung oder der Queröffnungen konstruktiv sichergestellt werden kann, daß insbesondere im Stoß- oder Fugenbereich eine sichere Verklebung bewirkt wird.

Weitere Merkmale der Erfindung sind Gegenstand von Unteransprüchen.

In den beigefügten Zeichnungen sind Ausführungsbeispiele der Erfindung dargestellt, die im folgenden näher beschrieben werden.

Es zeigen:
- Figur 1: eine perspektivische Darstellung einer T-Verbindung zwischen einem Sprossen- und einem Rahmenprofil vor der endgültigen Montage,
- Figur 2: eine weitere perspektivische Darstellung der T-Verbindung gemäß Figur 1 aus einer anderen Blickrichtung,
- Figur 3: einen Teilschnitt durch ein Rahmenprofil einer T-Verbindung mit einer Teilansicht eines anzuschließendes Sprossenprofiles,
- Figur 4: eine Stirnansicht eines T-Verbinders gemäß Ausführungsbeispiel nach Figur 1,
- Figur 5: eine Ansicht in Richtung des Pfeiles V in Figur 4,
- Figur 6: eine Stirnansicht eines weiteren T-Verbinders gemäß Ausführungsbeispiel nach Figur 1,
- Figur 7: eine Ansicht in Richtung des Pfeiles VII in Figur 6.

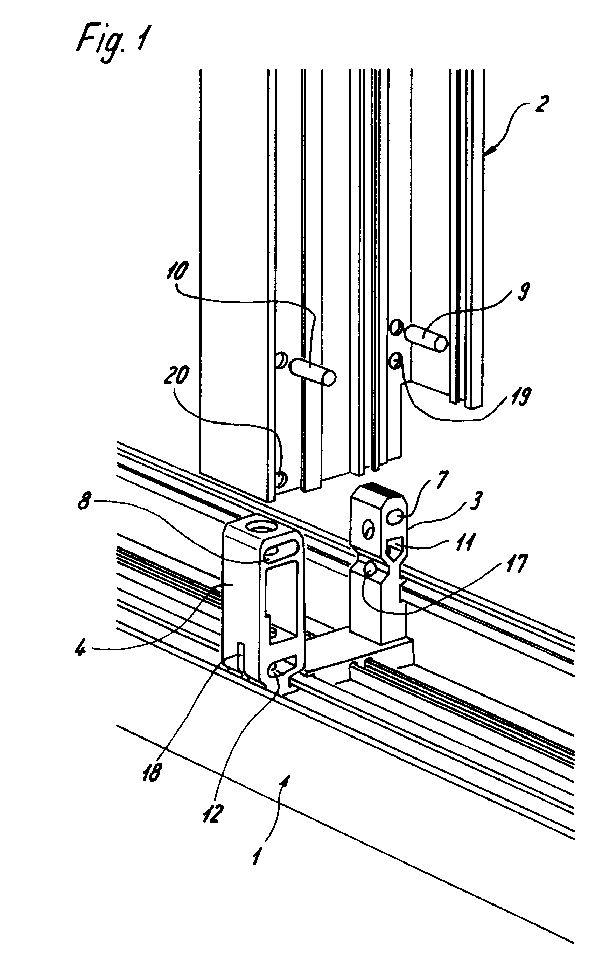

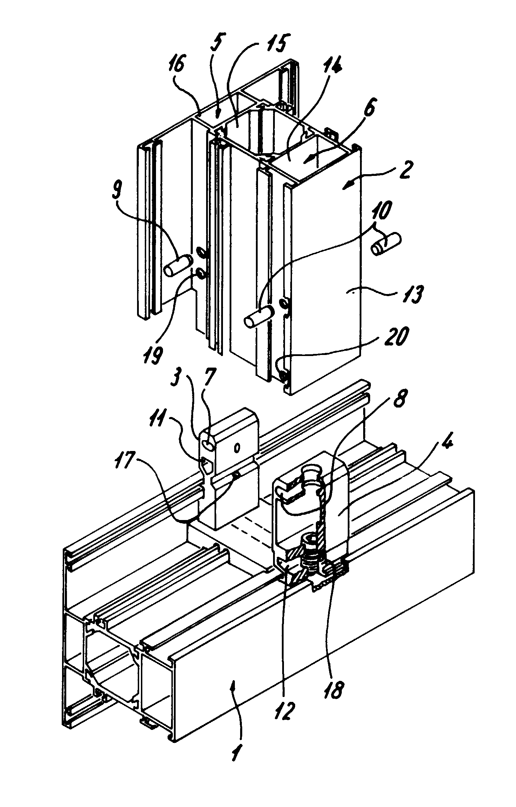

In den Figuren 1 und 2 ist mit dem Bezugszeichen 1 ein Rahmenprofil und mit dem Bezugszeichen 2 ein Sprossenprofil einer T-Verbindung bezeichnet.

Am Rahmenprofil 1, welches im dargestellten Ausführungsbeispiel als wärmegedämmtes Profil ausgebildet ist, sind zwei T-Verbinder 3 und 4 festgelegt, welche in entsprechend dimensionierte Hohlkammern 5 bzw. 6 des Sprossenprofiles 2 eingreifen.

Die T-Verbinder 3 und 4 sind in ihren oberen Endbereichen mit Aufnahmekanälen 7 bzw. 8 versehen in welche das Sprossenprofil 2 durchtretende Befestigungsbolzen 9 bzw. 10 eingreifen. Durch diese Befestigungsbolzen 9 bzw. 10 wird eine mechanische Verbindung zwischen den T-Verbindern 3 und 4 sowie dem Sprossenprofil 2 hergestellt. Statt der dargestellten Befestigungsbolzen können hier wahlweise auch Befestigungsschrauben oder andere Verbindungsmittel verwendet werden.

Die T-Verbinder 3 und 4 sind mit in Längsrichtung des Rahmenprofiles 1 durchgehend verlaufenden Kleberverteilungskanälen 11 bzw. 12 ausgestattet, die zumindest eine zu einer parallel zum Rahmenprofil 1 verlaufenden Hohlkammerwandung 13, 14, 15 oder 16 hin verlaufende Queröffnung 17 bzw. 18 aufweisen.

Die beiden Kleberverteilungskanäle 11, 12, die gemäß den Figuren 1 und 2 als stirnseitig offene Hohlkammern der jeweiligen T-Verbinder 3 bzw. 4 ausgebildet sind, sind nach dem Einschieben in die jeweilige Hohlkammer 5 bzw. 6 des Sprossenprofiles durch die dortigen stirnseitigen Wandungen geschlossen.

Durch mindestens eine Einfüllöffnung 19 bzw. 20, die jeweils in einen Kleberverteilungskanal 11 bzw. 12 einmünden, kann nach dem Zusammensetzen der beiden Profile 1 und 2 beispielsweise ein Zweikomponenten-Kleber in den Kleberverteilungskanal 11 bzw. 12 eingespritzt werden, der sich dann durch die entsprechende Queröffnung 17 oder 18 an die jeweilige Hohlkammerwandung 13, 14, 15 oder 16 verteilt. Die entsprechenden Queröffnungen 17 oder 18 sind vorzugsweise im unmittelbaren Fugen- oder Stoßbereich angeordnet, so daß insbesondere im kritischen unteren Verbindungsbereich eine saubere Verklebung zwischen den T-Verbindern 3 und 4 sowie dem Sprossenprofil 2 erzielt wird.

Die Queröffnungen 17 oder 18 können die Form von Schlitzen oder Bohrungen aufweisen und wahlweise einseitig oder beidseitig des jeweiligen T-Verbinders 3 oder 4 angeordnet sein.

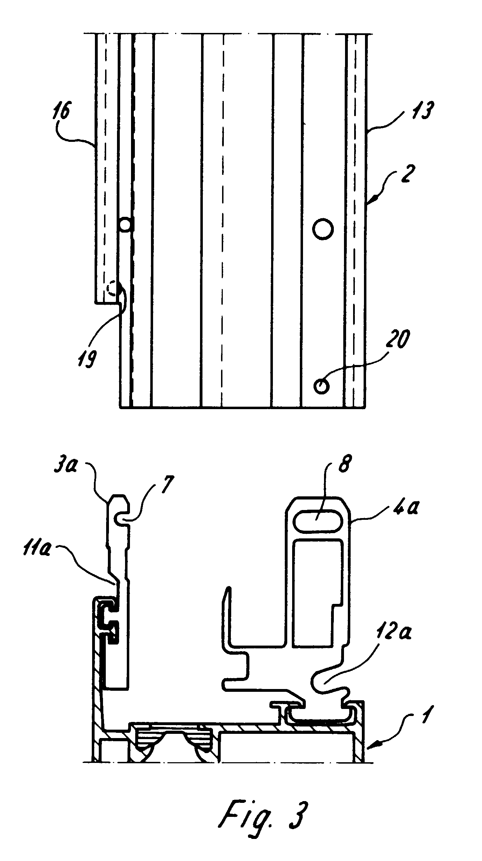

In Figur 3 ist ein Ausführungsbeispiel der Erfindung dargestellt, bei dem die T-Verbinder 3a bzw. 4a mit einseitig offenen Nuten 11a bzw. 12a versehen sind. Diese einseitig offenen Nuten 11a bzw. 12a werden nach dem Aufschieben des Sprossenprofiles 2 durch die Hohlkammerwandungen 13 bzw. 16 zu einem Kleberverteilungskanal geschlossen. Auch bei diesem Ausführungsbeispiel sind im Sprossenprofil 2 wiederum Einfüllöffnungen 18 und 19 vorgesehen, die nach der Montage in einer Flucht mit den Nuten 11a und 12a liegen. Hierdurch kann wieder ein entsprechender Kleber in den unteren Verbindungsbereich zwischen Sprossenprofil 2 und den T-Verbindern 3a und 4a eingefüllt und eine gezielte, materialsparende und saubere Verklebung herbeigeführt werden. Auch die T-Verbinder 3a und 4a nach Figur 3 können mit Queröffnungen versehen sein, um den Kleber auf beide Seiten des jeweiligen T-Verbinders 3a oder 4a verteilen zu können.

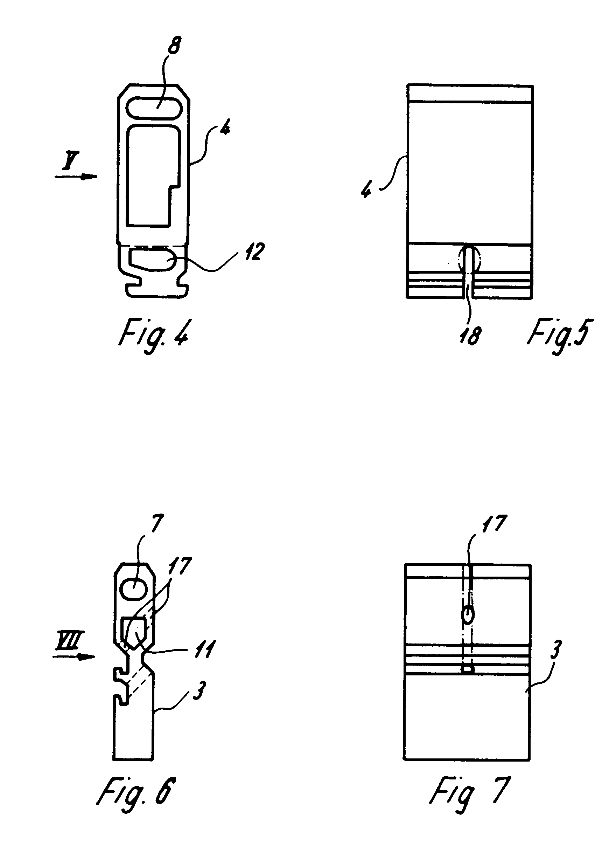

In den Figuren 4 bis 7 sind noch einmal die T-Verbinder 3 und 4 gemäß Ausführungsbeispiel nach den Figuren 1 und 2 gezeigt. Es wird deutlich, daß die Queröffnungen 17 oder 18 schlitzförmig oder in Form von Bohrungen ausgebildet sein können, wobei insbesondere bei der Verwendung von Bohrungen diese auch diagonal zum Querschnitt des T-Verbinders 3, gegebenenfalls auch höhenversetzt zueinander, angeordnet sein können, je nachdem, welcher Verteilungsweg für den in die Kleberverteilungskanäle 11 bzw. 12 eingefüllte Klebstoff gewünscht wird.

In jedem Falle bringt die Konstruktion gemäß der vorliegenden Erfindung den Vorteil mit sich, daß das Einbringen von Klebstoff in den Verbindungsbereich einfach und gezielt durchführbar ist und die Nachteile einer offenen Klebstoffverarbeitung behoben sind.

## Patentansprüche

1. T-Verbindung zwischen einem Sprossen- und einem Rahmenprofil, wobei am Rahmenprofil mindestens ein in eine Hohlkammer des Sprossenprofiles hineinragender T-Verbinder befestigt ist, der mittels Schrauben, Bolzen od. dgl. mit dem Sprossenprofil mechanisch verbunden und zumindest im Stoß- oder Fugenbereich zwischen Rahmenprofil und Sprossenprofil zusätzlich mit dem Sprossenprofil verklebt ist, ***dadurch gekennzeichnet,*** daß der T-Verbinder (3, 3a, 4, 4a) mindestens einen parallel zum Rahmenprofil (1) verlaufenden und über mindestens eine Einfüllöffnung (19, 20) im Sprossenprofil (2) zugänglichen Kleberverteilungskanal (11, 11a, 12, 12a) aufweist.

2. T-Verbindung nach Anspruch 1, dadurch gekennzeichnet, daß der Kleberverteilungskanal (11, 11a, 12, 12a) in Längsrichtung des Rahmenprofils durchgehend offen im T-Verbinder verläuft und ausschließlich von den entsprechenden Hohlkammerwandungen begrenzt ist.

3. T-Verbindung nach Anspruch 1 oder 2, dadurch gekennzeichnet, daß der Kleberverteilungskanal (11, 12) als stirnseitig offene Hohlkammer des T-Verbinders (3, 4) ausgebildet ist und zumindest eine zu einer parallel zum Rahmenprofil (1) verlaufenden Hohlkammerwandung (13, 14, 15, 16) des Sprossenprofiles (2) hin verlaufende Queröffnung (17, 18) aufweist.

4. T-Verbindung nach Anspruch 1 oder 2, dadurch gekennzeichnet, daß der Kleberverteilungskanal gebildet ist durch eine parallel zum Rahmenprofil (1) durchlaufende, einseitig offene Nut (11a, 12a) des T-Verbinders (3a, 4a) und die der offenen Nutseite gegenüberliegende Hohlkammerwandung (13, 14, 15, 16) des Sprossenprofiles (2).

5. T-Verbindung nach einem oder mehreren der vorhergehenden Ansprüche, dadurch gekennzeichnet, daß die Queröffnungen (17) als Querbohrungen ausgeführt sind.

6. T-Verbindung nach einem oder mehreren der Ansprüche 1 bis 4, dadurch gekennzeichnet, daß die Queröffnungen (18) in Form von Querschlitzen ausgeführt sind.

7. T-Verbindung nach Anspruch 5, dadurch gekennzeichnet, daß die Querbohrungen (17) gegenüber der Längsachse des Sprossenprofiles (2) geneigt verlaufen.

## Claims

1. A T-connection between a transom member and a frame member, wherein fixed to the frame member is at least one T-connector which projects into a hollow chamber of the transom member and which is mechanically connected to the transom member by means of screws, bolts or the like and which is additionally glued to the transom member at least in the junction or connection region between the frame member and the transom member, characterised in that the T-connector (3, 3a, 4, 4a) has at least one glue distribution passage (11, 11a, 12, 12a) which extends parallel to the frame member (1) and which is accessible by way of at least one filling opening (19, 20) in the transom member (2).

2. A T-connection according to claim 1 characterised in that the glue distribution passage (11, 11a, 12, 12a) extends in the T-connector in continuously open condition in the longitudinal direction of the frame member and is delimited exclusively by the corresponding hollow chamber walls.

3. A T-connection according to claim 1 or claim 2 characterised in that the glue distribution passage (11, 12) is in the form of a hollow chamber open at its ends in the T-connector (3, 4) and has at least one transverse opening (17, 18) extending towards a hollow chamber wall (13, 14, 15, 16) of the transom member (2), said hollow chamber wall extending parallel to the frame member (1).

4. A T-connection according to claim 1 or claim 2 characterised in that the glue distribution passage is formed by a groove (11a, 12a) in the T-connector (3a, 4a), the groove being open at one side and extending parallel to the frame member (1), and the hollow chamber wall (13, 14, 15, 16) of the transom member (2), which hollow chamber wall is disposed opposite the open side of the groove.

5. A T-connection according to one or more of the preceding claims characterised in that the transverse openings (17) are in the form of transverse bores.

6. A T-connection according to one or more of claims 1 to 4 characterised in that the transverse openings (18) are in the form of transverse slots.

7. A T-connection according to claim 5 characterised in that the transverse bores (17) extend inclinedly relative to the longitudinal axis of the transom member (2).

## Revendications

1. Dispositif d'assemblage en T entre un profilé de meneau et un profilé de cadre, sur le profilé de cadre étant fixé au moins un raccord en T, s'engageant dans une chambre creuse du profilé de meneau, qui est assemblé mécaniquement au moyen de vis, de boulons ou similaires, avec le profilé de meneau et est collé en supplément avec le profilé de meneau, au moins dans la zone de joint entre le profilé de cadre et le profilé de meneau, caractérisé en ce que le raccord en T (3, 3a, 4, 4a) présente au moins un canal de distribution de colle (11, 11a, 12, 12a) s'étendant parallèlement au profilé de cadre (1) et accessible par au moins une ouverture de remplissage (19, 20) pratiquée dans le profilé de meneau (2).

2. Dispositif d'assemblage en T selon la revendication 1, caractérisé en ce que le canal de distribution de colle (11, 11a, 12, 12a) s'étend dans le raccord en T, ouvert de bout en bout, dans la direction longitudinale du profilé de cadre et est exclusivement limité par les parois correspondantes de la chambre creuse.

3. Dispositif d'assemblage en T selon la revendication 1 ou 2 caractérisé en ce que le canal de distribution de colle (11, 12) est conformé en chambre creuse ouverte frontalement du raccord en T (3, 4) et présente au moins une ouverture transversale (17, 18), s'étendant vers une paroi de chambre creuse (13, 14, 15, 16) parallèle au profilé de cadre (1), du profilé de meneau (2).

4. Dispositif d'assemblage en T selon la revendication 1 ou 2, caractérisé en ce que le canal de distribution de colle est formé par une rainure (11a, 12a) du raccord en T (3a, 4a), ouverte d'un côté, parallèle au profilé de cadre (1), ainsi que par la paroi de chambre creuse (13, 14, 15, 16) faisant face au côté de rainure ouvert, du profilé de meneau (2).

5. Dispositif d'assemblage en T selon une ou plusieurs des revendications précédentes, caractérisé en ce que les ouvertures transversales (17) sont des perçages transversaux.

6. Dispositif d'assemblage en T selon une ou plusieurs des revendications 1 à 4, caractérisé en ce que les ouvertures transversales (18) sont réalisées sous la forme de fentes transversales.

7. Dispositif d'assemblage en T selon la revendication 5, caractérisé en ce que les perçages transversaux (17) sont inclinés par rapport à l'axe longitudinal du profilé de meneau (2).
